# EUROPEAN PATENT APPLICATION

(11) **EP 4 651 056 A1**
(43) Date of publication of application: **19.11.2025**
(21) Application number: 24176073.5
(22) Date of filing: 15.05.2024
(51) Int. Cl.: G06Q 20/34, G06N 3/045

(54) **SYSTEM AND METHOD FOR GENERATING A PERSONALIZED CARD REPRESENTATION**

(71) Applicant: Giesecke+Devrient ePayments GmbH, 81677 München (DE)
(72) Inventor: Zadeh Heidari, Mehdi, 81677 München (DE)
(74) Representative: LKGLOBAL Lorenz & Kopf Patentanwalt Attorney at Law PartG mbB

(57) **Abstract**

The present invention relates to a system for creating personalized card designs, comprising an input module to receive descriptions of a desired graphic, a database module to store guidelines for content exclusion and card layout templates, a scoring module to ensure the user input meets the guidelines, an image generator to create graphics if the input passes the content check and an image processor to craft the final card design using the graphic and a chosen template. The invention further relates to a method involving receiving word-based descriptions of a graphic, checking the content against exclusion criteria, generating the graphic if approved, and producing the card design with the graphic and a template.

## Description

The present invention relates to a method and system for generating personalized banking cards. More specifically, it pertains to the use of artificial intelligence and machine learning techniques to create personalized card designs based on user-provided data.

The individualization of banking cards is a significant area of interest. Traditional systems of card individualization have relied on predefined or existing data like photographs, graphical elements or user provided images. However, these methods have limitations in terms of scalability, uniqueness, and personal relevance to the cardholder. A significant challenge is the cumbersome and resource-intensive screening process associated with user-uploaded images. This challenge is particularly pronounced when considering localization aspects related to cultural or political sensitivities. Additionally, verifying user based graphical input can require manual supervision. Automated verification can data be time and resource intensive, and additionally have a high error rate requiring manual intervention. Consequently, ensuring that the images comply with legal, cultural, and ethical standards can be challenging.

Different regions have varying cultural norms and sensitivities. What may be acceptable in one country could be offensive or inappropriate in another. Existing screening processes may struggle to adapt to these nuances effectively.

It can be seen as an objective to seamlessly transform user-provided descriptions into customized card designs while adhering to content guidelines.

According to a first aspect, the invention relates to a system for generating a personalized card representation. The system can comprise an input module configured to receive a user input descriptive of a graphical representation. The user input can be word-based. The system can further comprise a database module configured to store guideline data defining exclusion criteria for the user-input. Additionally, the system can comprise a scoring module configured to perform a content check of the user input according to the guideline data. The system can also comprise an image generator configured to generate a graphical representation according to the user input when the content check is passed, and an image processor configured to generate the card representation according to the graphical representation and according to a card template. The system ensures compliance with predefined content and context guidelines before providing the input to the generative image algorithm. The system can also utilize generative artificial intelligence, e.g., a generative transformer which are preferably pretrained (GPTs), to optimize the process of generating an image based on the user input. The scoring module can determine the context of the user input and can be configured to adapt based on received user feedback through AI-based chat platform and preferably also corresponding reviewer's feedback. The feedback can be provided by a human reviewer. The scoring module can be pre-trained and can be configured to fine tune its cognition with processing user inputs and correlating feedback data.

The scoring module can be configured to generate database entries and/or data structures according to its inference from user input and preferably also feedback data. The scoring module can use natural language processing to analyze the text or speech input. The generated image is further processed to adjust visual elements to align with preapproved template features.

The generation of images using AI models may employ machine learning and neural networks to analyze the user input. The graphical representation generated by these models can be a visual interpretation of the user input, conforming to a set of guidelines according to guideline data and a set of design rules in the form of template data.

The content check of the user input may categorize a user input according to a generated score as acceptable, conditionally acceptable, or not acceptable for further processing . The scoring module can generate a score for a corresponding user input, wherein the user input can be categorized according to the score value in relation to threshold values. A first threshold value can be defined for user inputs to be acceptable and thus can pass to the image generator. A user input scoring between the first threshold and a second lower threshold can be categorized as a conditional pass. Herein, a user input scoring in this bracket may be processed by the image generator, but a subsequent analysis, i.e., by a verification module, can be performed to check the generated graphical representation against exclusion criteria. Additionally or alternatively, the graphical representation can be manually checked. This verification can generate additional feedback data which can be used for training of the scoring module. An acceptable user and/or a conditionally acceptable input can be provided to the AI image generation. The input module can be configured to receive a text input and/or speech input and the content scoring module can analyze the received input to exclude specific content and/or context. A generative image algorithm can create an image based on the user input, and a template feature module can incorporate preapproved template features into the generated image.

The output of the system, respectively method is a personalized card. Herein the term personalized can be differentiated from the term individualized. A personalized card comprises elements that relate to the individual providing the user input. Specifically, a personalized card is based on unique data provided by the user and the image generator is configured to generate a unique graphical representation according to the user data. Consequently, also the card representation is unique and relates to the provided user data. Moreover, the user data is processed to generate a complex, unique graphical representation. Furthermore, the system realizes a predictable and highly efficient method to generate acceptable, i.e., adhering to card design guidelines, and unique, i.e., tailored to the user input, cards that can be automatically processed for production. The system also achieves the advantage that the card design processes is decoupled from the direct user input: The user may provide a language bases input and is subsequently provided with a graphical representation, or preferably a plurality of graphical representations to choose from. The user may not directly alter the graphical representation, besides basic image modifications, e.g., cropping, shifting, rotating, skewing.

The user input can be received via an interface configured to capture a text and/or speech input. The input being descriptive of a graphical representation can be defined as an interpretation directive such that the image generator will interpret the user input as instructions relating to features to realize in the graphical representation. In other words, the user prompt can relate to any type of content which not necessarily comprises literal instructions or features to set as graphical elements. For example, the user may describe an emotion, event and/or a personal relation.

The user input is a conversational interface allowing users to not only provide description of the image they wish the AI to generate but also it is a platform to provide feedback to the AI in case the input was deemed to be non-compliant based on the provided guideline. Accordingly, The AI will use the user feedback for its continuous learning.

Exclusion criteria for the user-input can be word based. Specifically, literal exclusion criteria can be defined, such that when specific words, word segments and/or phrases are detected, the user input can be excluded from further processing. Furthermore, the content exclusion criteria can also comprise directives to exclude word combinations, words in vicinity of each other, e.g., each word may be allowed on its own, but the combination of the words can be prohibited. This is done by training the AI to understand the context of the user input using Large Language Model (LLM). The context and the sentiment of the user input is then evaluated against the guidelines defined per each client.

The guideline data can further define context exclusion criteria for the user input.

The database may also comprise template data defining card template comprising a set of layout criteria for the card representation. Alternatively, the template data can be provided separately to the image processor. For example, the template data can be part of a local storage at the image processor.

Generally, the content check can comprise applying a set of guidelines to the user input and to filter out user inputs that violate the guidelines. The user input can be provided as filtered user input by the scoring module when the user input passes the content check. The scoring module can ensure compliance with predefined content guidelines before providing the input to the generative image algorithm. The content scoring module can be configured to utilize natural language processing to analyze the text or speech input.

The scoring module can be configured to retrieve the set of guidelines of the guideline data from the database according to a content directive. The content directive can be provided by an external source, e.g., a card issuer, such that the allowable content can be tailored to the requirements of the third party. Specifically, the content directive can be based on regional, cultural topics, controversial topics, and/or brand considerations . The content directive may comprise a subset of guidelines from the guideline data and/or may comprise a set of weights relating to the guideline data such that specific guidelines can be emphasized.

The scoring module can be configured to tokenize the user input, e.g., split the user input into phrases, words and/or sub-words. Additionally, the scoring module can be configured to amend the user input before performing the content check. Thereto, the scoring module can remove stop words (e.g., common words like "the", "and", etc.). The scoring module may also be configured to perform stemming and/or lemmatization to reduce words to their root forms.

The scoring module can be configured to extract features from the user input. Thereto, the scoring module can implement TF-IDF (Term Frequency-Inverse Document Frequency) defining a numerical representation of the importance of a word in a document relative to its frequency across all documents, word embeddings (e.g., Word2Vec, GloVe) defining dense vector representations of words that capture semantic meaning, and/or topic modelling (e.g., Latent Dirichlet Allocation) to identify topics within the text. Based on these analysis methods, the scoring module may generate user input meta data expanding the available content to check against database entries.

The scoring module can be configured to prompt for an amended user input when non-compliance of the user input with at least one guideline from the set of guidelines is detected.

Using deep learning techniques, the image generate can be configured to create a graphical designs that aligns with the user input, specifically with the user's intent. The graphical representation can be a visual interpretation of the user input conforming to the set of guideline data and to the set of template data. Preferably, the content directive defines the guideline data to be applied to the user input. Herein, the content directive can also define a plurality of generating parameters for the image generation. The image generator can be configured to execute a generative image algorithm configured to create an image according to the user input. The generative image algorithm can utilize machine learning techniques to optimize the generation of the image based on the user input.

According to an embodiment, the image generator can be configured to generate a plurality of graphical representations, which are presented to the user. The user may select one of the plurality of graphical representations for further processing. For example, the image generator may generate up to 10, preferably 2 to 4, graphical representations for the user to choose from.

The image generator can be configured to apply content moderation to the user input such that the generated graphical representation adheres to the guideline data, respectively the content directive. The image generator can utilize a trained machine learning model, such as a generative adversarial network (GAN) and/or convolutional neural network (CNN).

The image generator can be configured to limit the process of generating the graphical representation according to predefined image parameters to reduce a computational cost of generating the graphical representation.

The image processor can be configured to receive template data defining a card template comprising a set of layout criteria for the card representation.

The image processor can provide the card representation incorporating the graphical representation into the card template. The template can comprise preapproved template features, e.g., including a bank logo, a chip preserved area, and/or a scheme logo. The preapproved template features can be applied to the generated image in a manner that preserves the functionality of the corresponding template features. The image processor can be configured to further process the graphical representation, in particular to adjust visual elements of the graphical representation to align with the preapproved template features. For example, the graphical representation can be geometrically transformed (enlarged, shrunk, stretched, skewed, etc.) to fit the template, preferably to increase visibility of features of the graphical representation.

The template data can be provided by a third party. Also, a third party may provide a template example. The image processor can be configured to generate template data according to the template example, wherein the template data allows the integration of card features and the graphical representation by the image processor to generate the personalized card representation.

The image processor can be configured to provide a graphical control interface to the user and preferably to receive control input via the interface. The control input can relate to manipulating the graphical representation. Thereto, the image manipulation can include shifting, cropping, rotating, skewing, adjusting color, adjusting contrast, and/or adjusting brightness. The image processor can be configured to limit the image manipulation according to the position and shape of the preapproved template features.

The scoring module can be configured to determine a confidence score of the user input corresponding to a probability of the user input adhering to the exclusion criteria according to the guideline data. Additionally, the scoring module can be configured to fail the content check when the confidence score undercuts a minimum confidence threshold. A low confidence score can be an indicator for a high likelihood of the user input violating an exclusion criterion according to the guideline data. The context score can relate to at least one exclusion criterion, preferably to a plurality of exclusion criteria.

The scoring module can be configured to determine context data of the user input, or part of the user input and to determine a context violation with respect to the exclusion criteria according to the context data, respectively a subset of the context data. Thereto, the scoring module can base the confidence score on the context data, respectively a corresponding analysis of the context data. The database can comprise static entries of unacceptable words and/or contexts. The scoring module can be configured to access a further database, preferably an externally maintained database, comprising additional unacceptable content, e.g., a continuously updated list of persons (e.g., celebrities), emerging socially sensitive topics or trends, to be flagged as unacceptable in the user input. The confidence score can be defined as a numerical score representing the level of confidence that the user input complies with the exclusion criteria.

Determining the confidence score can comprise computing a similarity measure of the user input or a segment of the user input to a database entry, e.g., using cosine similarity, Jaccard similarity or any other distance metric. Thereby, the scoring module can be configured to identify terms that may not literally correspond to a database entry but may be similar enough to warrant filtering out the respective user input.

The scoring module can comprise a generative AI component configured to adapt database entries and/or expand the database content according to received user inputs. For example, the scoring module may process a user input and, preferably after the subsequently generated image is cleared or rejected for final processing, the user input can be used as training data to further tune the scoring module pertaining to which type of user input is allowable and which user input should be rejected.

The generative AI component can be trained on an initial word-based rule set, style templates, context rules, and/or examples of allowable user input.

The generative AI component can be configured to determine the confidence score. The generative AI component can be configured to determine a similarity measure as a basis for the confidence score. The similarity measure can be generated by interpreting the user input to determine a relation of the user input or a part of the user input, e.g., a word, to a context exclusion criterion, e.g., a prohibited word and/or a prohibited context. In particular, the generative AI component can be configured to use a Large Language Model (LLM) analysis to determine a similarity measure of at least part of the user input to the guideline data. Based on the similarity measure a comparability of the user input to an exclusion criterion, e.g., a prohibited word and/or a prohibited context, can be quantified. The scoring module can be configured to apply a threshold value comparison to the confidence score such that when the confidence score exceeds the threshold value, the user input fails the content check.

The generative AI component can be configured to evaluate the generated confidence score. The generative AI component can be configured to reject any user input with a corresponding confidence score below the minimum confidence threshold. The generative AI component can be configured to capture user input and subsequent responses which can be used for auditing and as additional learning data to further train the generative AI component.

The generative AI component can be configured to pass the user input to the image generator when the corresponding confidence score exceeds a further confidence threshold value which is higher than the minimum confidence threshold value.

The generative AI component can be configured to flag a user input with a corresponding confidence score between the minimum confidence threshold value and the further confidence threshold value for review. The review can be performed by the verification module or a human reviewer.

The generative AI component can be configured to perform a continuous learning process. The generative AI engine can continuously and dynamically update the guideline data comprised in the database module. Thereby its ability to screen and understand user inputs can be enhanced. This process can be broadly categorized into the following stages.

Firstly, an initial training can be performed. The generative AI component is initially trained to recognize and reject certain types of user inputs. This may include not only exact matches to prohibited words but also contexts that are deemed unacceptable. This training can be achieved using a Large Language Model (LLM) analysis. The training methods include using a static text/database input of unacceptable words/contexts and accessing an externally maintained database of prohibited words, such as a growing list of celebrities.

Secondly, the scoring module can perform autonomous learning. The generative AI component can be configured to learn autonomously, improving its screening process the more it is used. The generative AI module can be configured to learn from the output of the image processor, i.e., the provided image analysis, and/or feedback from human reviewers.

Additionally, the generative AI component can be trained based on feedback (feedback data) relating to false rejections.

The generative AI component can be adapted to a predefined set of guideline data such that a custom training can be achieved. Thereby, the training can be adapted to specific requirements of a card issuer. Specifically, custom training can be achieved providing custom filter profiles relating to acceptance and rejection of user input. The scoring module can be configured to identify a card issuer associated with a specific user input and select a corresponding custom filter. Thereby, the scoring and filter result can be adjusted accordingly. For instance, if a card issuer prohibits specific content on their cards, the scoring module would reject corresponding user input.

The scoring module can be configured to apply weights or word embeddings to interpret the user input and increase compatibility when checking against database entries. The user input can be tailored for comparison with the database.

The scoring module may continuously learn from its processing of user inputs. It may adapt to new trends, cultural shifts, and emerging sensitivities. Thereto, a self-learning AI can be implemented to ensure that the screening process remains up-to-date and effective.

The scoring module can be configured to adjust the user input by performing one of the following functions: excluding a part of the user input, anonymizing a part of the user input, substituting a part of the user input with a predefined statemen, rearranging statements of the user input, replacing a keyword according to the guidelines with a predefined replacement term, and/or mending a part of the user input with a predefined statement.

The system can comprise a verification module which is configured to generate a description of the graphical representation, and/or to generate a compliance score, preferably according to the description. Additionally, the verification module can be configured to verify the card representation for production when the description passes the content check according to the guideline data and the compliance score exceeds a minimum threshold value, e.g., a minimum compliance threshold. The verification module can analyse the graphical representation and preferably also the corresponding confidence score. The verification module can comprise a generative AI component configured to evaluate images for compliance with predefined guidelines. This component can operate subsequent to the scoring module employing the AI text screening, which preliminarily assesses the textual content and assigns a confidence score reflecting the user inputs adherence to the guidelines.

The verification module can be tasked with conducting an analysis of graphical representations generated by the image generator. It may utilize algorithms, specifically machine learning algorithms, to interpret the visual content and generate a comprehensive description of the elements within the image. Using machine learning the acceptability of the graphical representations can be discern and evaluated based on a set of established criteria.

The verification module can be configured to analyze the graphical representation, by identifying objects, patterns, and/or potential issues that may violate the guidelines.

The verification module may also be configured to determine a compliance score defined as a numerical score representing the level of compliance, with a perfect score indicating full adherence to the guidelines. The compliance score can be based on a word-based description of the graphical representation generated by the verification module and its corresponding judgement signified by the compliance score. The word-based description can be checked against the guidelines data.

The verification module can be configured to provide a part of the graphical representation, where the verification module detected potentially inappropriate content. Thereby, the verification module can isolate and provide separated view, preferably a view that is also magnified, of the concerned area for closer inspection.

The verification module can be configured to provide a descriptive report detailing which image characteristics (e.g., image features, context, content, etc.) are identified, along with the compliance score indicating the graphical representations' acceptability. For example, the verification module may be configured to quantify its assessment by assigning a score out of 100, with a score of 100 signifying an image free of prohibited content.

The verification module can be configured to provide update instructions to update the content exclusion criteria when the threshold value is undercut. The update instructions comprise text-based criteria according to the user-input, whose corresponding card representation failed verification. The output of the verification module can serve as a preliminary assessment to aid further review, e.g., by a human reviewer, in making an informed decision regarding the image's acceptance or rejection. In the event of rejection, the descriptive report, compliance score and/or further feedback data, can be provided to the scoring module. The scoring module can be configured to integrate this data to refine the content check. For example, this data can be fed back into the generative AI model as training data.

The integration with the scoring module allows for continuous improvement of the screening process based on feedback data, i.e., automatic feedback or preferably and/or human reviewer inputs. Thereby, the system is capable of learning from past decisions to enhance its accuracy over time. The system can be tailored to various sets of guidelines, making it versatile across different regulatory frameworks.

This AI Image Screening Engine represents a significant advancement in automated content moderation, providing a robust tool for ensuring the compliance of generated images with specific standards. Its ability to learn and adapt makes it an invaluable asset in the iterative process of AI-driven content screening.

The user input can comprise an emotional context. Thereto, the scoring module can be configured to determine at least one of the following according to the emotional context of the user input:
- an affective tone,
- an emotional valence,
- emotive undertones, and/or
- sentimental resonance.

For describing emotional context and feeling, various phrases can be used to convey the nuances of different emotions. Sentimental resonance can refer to the emotional significance or impact that the graphical representation should evoke based, in particular when the user input comprises elements descriptive of a personal experience and/or memory. Affective tone can relate to an underlying mood and/or emotional quality to be conveyed by the graphical representation, such as warmth, coldness, or nostalgia. Further, the emotional valence can relate to the intrinsic attractiveness or averseness of an event, object, and/or situation described in the user input. In the context of image generation, it can refer to the positive or negative emotion that the image is intended to evoke. Further, the scoring module may determine a mood congruence defining a compatibility of the graphical representation with a desired emotional state and/or mood of the user.

The scoring module can be configured to determine a context parameter according to the user input. The confidence score can also be based on the context parameter. The context parameter may define a variable associated with the user input. Thereto, the scoring module may identify at least one of tone, style, social background and/or the user's intention.

The context parameter can be related to a tone of the user input. Herein, tone may refer to the user's attitude or emotional disposition expressed through the language and style of the text or speech comprised in the user input (e.g., sarcastic, playful, formal, etc.). Also, the context parameter can relate to a style of the user input. The style of the text or speech comprised in the user input may encompass the user's unique way of expression, including sentence structure, vocabulary, and/or rhetorical devices (e.g., descriptive, minimalist, stream of consciousness, etc.). The context parameter may further relate to a political, religious, and/or social background, i.e., the historical, cultural, and political context in which the user input is written, respectively spoken. As a further example, the context parameter can relate to a user's Intention. This may define a purpose or goal the user aims to convey through the user input (e.g., persuasive, entertainment, informative, etc.).

The scoring module can be configured to filter, i.e., exclude or pass, a user input according to the determined context parameter. Thereto, the scoring module can be configured to also base determining the confidence score on the context parameter and can be configured to filter user inputs that correspond to or are similar to context parameter values comprised in a database entry.

The scoring module can be configured to provide a content warning when a content exclusion criterion is violated. Additionally, the scoring module can be configured to prompt the user to provide a modified user input, comprising an amendment to remedy the content exclusion criterion violation. This can achieve the advantage of reducing computational load on the image generator as unacceptable user inputs can be filtered prior to being provided to the image generator, increasing the likelihood of images being generated by the image generator passing the check by the verification module and being passed on to production. Prompting the user can comprise information relating to parts of the user input that were identified as violating the guidelines data or that were cause for the system to generate a low confidence score of the corresponding user input. Furthermore, the user can be provided with further information relating to the specific content exclusion criteria to increase the likelihood of subsequently receiving an acceptable user input.

According to a second aspect, the present invention can relate to a method for generating a personalized card representation. The method can comprise the steps of receiving a user input descriptive of a graphical representation, and performing a content check of the user input according to guideline data defining content exclusion criteria for the user-input. Additionally, the method can comprise the steps of generating a graphical representation according to the user input when the content check is passed, and generating the card representation according to the graphical representation and according to a selected card template.

The method can comprise retrieving the set of guidelines from the database according to a content directive, preferably provided by an external source, such as a card issuer. Furthermore, the method can comprise tokenizing the user input. The method may also comprise prompting for an amended user input or a new user input when non-compliance of the previous user input with at least one exclusion criterion from the set of guidelines is detected.

The method can comprise executing a generative image algorithm creating an image according to the user input. Preferably, the method comprises generating a plurality of graphical representations and presenting the generated graphical representations for selection to the user.

The method can comprise processing the graphical representation into a card representation according to a template. The template can comprise preapproved template features, which can be applied to the generated image in a manner that preserves the functionality of the corresponding template features. Process the graphical representation can comprise adjusting visual elements of the graphical representation, e.g. aligning them with the preapproved template features. Manipulating the graphical representation can include shifting, cropping, rotating, skewing, adjusting color, adjusting contrast, and/or adjusting brightness.

The method can comprise the steps of determining a confidence score of the user input corresponding to a probability of the user input adhering to an exclusion criterion according to the context data. The method can further comprise analysing the graphical representation and determining a compliance score corresponding to a probability of the graphical representation adhering to the guideline data. Additionally, the method can comprise verifying the card representation for production when the compliance score exceeds a minimum compliance threshold. According to a third aspect, the present invention relates to a computer program product, comprising computer-readable medium bearing instructions executable by a processing device capable of receiving a user input and providing a card representation. The instructions, when executed by the processing device, cause the processing device to perform steps of the method according to any one of the method embodiments.

According to a fourth aspect, the present invention relates to a computer-readable data carrier, comprising a non-transitory computer-readable medium. The medium has stored thereon a computer program according to any one of the computer program embodiments. The computer program, when executed by a processing device, can cause the processing device to perform the method according to any one of method embodiments.

Further aspects, features and advantages of the present invention will become apparent to those of ordinary skills in the art upon reviewing the following detailed description of preferred embodiments and variants of the present invention in conjunction with the accompanying figures.

Reference will now be made to the accompanying figures, in which
FIG. 1 shows a schematic representation of the system according to an embodiment of the present invention; and
FIG. 2 shows a schematic representation of the method according to an embodiment of the present invention.

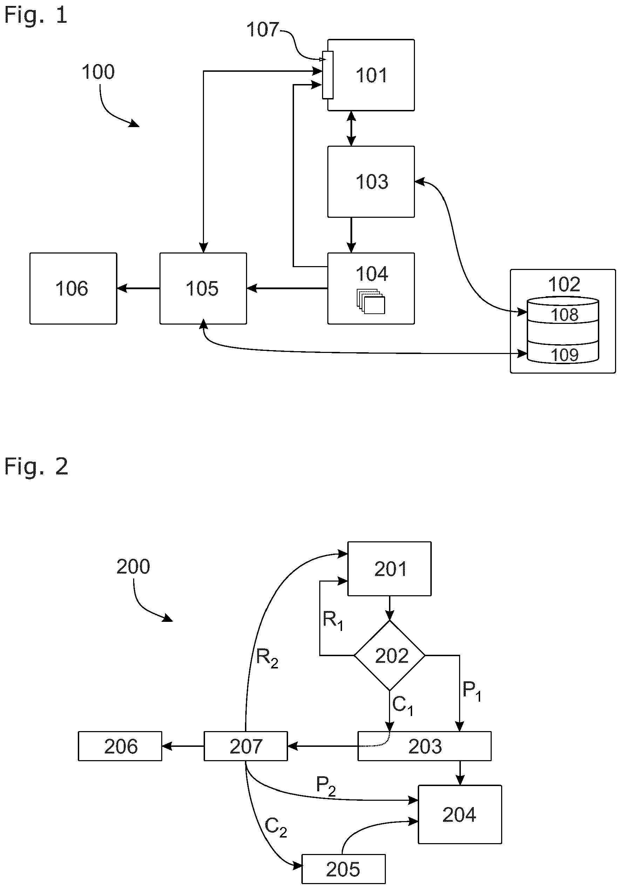

FIG. 1 shows a schematic representation of the system 100 for generating a personalized card representation according to an embodiment of the present invention.

The system enables customizing of cards, specifically, banking cards, as a service Herein, the system allows custom graphical content but avoids allowing card holders to upload their own image to receive a customized designed card. Thereby, the process of providing a personalized card can be time efficient for the user and the card issuer. Specifically, design costs can be reduced by avoiding a complex, processing intensive, and/or manual screening process. The system and method can be easily localized, e.g., adapted to varying cultural or political aspects, by altering the content directive, i.e., the guidelines chosen to apply when checking the user input. The system does not rely on graphical screening, but employs a generative algorithm for text input analysis to ensure it is appropriate. Self-learning of new prohibited contents and/or contexts by the generative algorithm ensure the screening process is constantly adapting to perfect the screening. The generative AI component This module can be trained on prohibited texts and can interpret the user input to check if it includes content with a similar context. Thereby literally excluded content and equivalent content can be recognized. The screening process by the scoring module can be constantly improved with an increasing number of accepted card representations and/or an increasing number of rejected user inputs or and/or rejected card representations.

Adapting the generative AI can also be aided by direct user feedback. Herein, the system may reject a user input and the user, in knowledge of the relevant content or context exclusion criteria provided by the scoring module, may be of the opinion that the rejection constitutes a false-positive. The input module can be configured to receive further user input comprising a reasoning as to why the rejected user input does not constitute excluded content or context. The scoring module can be configured to perform a content check of the user input in conjunction with the further user input to determine a corresponding confidence score. Optionally a combined user input can be provided to the image generator for image generation should the further user input lead to a pass of the content check.

The system architecture can comprise interconnected modules. Input Module 101, the scoring Module 103, the database Module 102, the image generator 104, the image processor 105 and the verification module 106. User input can be received through an interface 107 of the input module 101 that can capture text and/or speech. Alternatively, the user input can be provided digitally, e.g., as a file comprising text and/or speech. The input is generally interpreted to describes a graphical representation and serves as an interpretation directive for the image generator 104. Essentially, the image generator 104 can interpret the user input as instructions for features to include in the graphical representation. The user prompt need not consist solely of literal instructions or specific features; it can relate to various types of content, such as emotions, events, or personal relations.

The scoring module 1023 can apply a set of guidelines to the user input and generate a score providing a quantified value for the adherence of the user input to the guidelines, i.e., assessing the potential of the user input to violate an exclusion criterion. If the user input adheres to the guidelines, the scoring module provides can provide it to the image generator for subsequent processing. Different metrics, e.g., thresholds, can be applied to the confidence score, to either pass (Pi), conditionally pass (Ci) or reject (Ri) the user input for further processing. A conditional pass can trigger a further review.

If the user input violates any guideline, the scoring module 103 can prompt for an amended input, e.g., via the interface 107.

The database module 102 can contain guideline data 108, including exclusion criteria based on word patterns (e.g., literal exclusion criteria for specific words or phrases) and/or context exclusion criteria. Also, template data 109 defining layout criteria for card representations can be stored in the database. Optionally, the template data 108 can be stored locally at the image processor 105 or can be provided to the image processor from an internal or external source. The content analysis by the scoring module 103 is quantified in the confidence score based on the probability that the user input adheres to content exclusion criteria. Context analysis helps to identify context violations, considering both context parameters and similarity scores. The image generator 104 can be configured to create graphical designs aligned with the user's intent using deep learning techniques. The graphical representation serves as a visual interpretation of the user input, conforming to the set of guideline data. The image generator 104 can generate multiple graphical representations. These representations can be presented to the user, who can then select one for further processing. The image generator 104 can apply content moderation to ensure that the generated graphical representation adheres to the guideline data. By limiting the generation process according to predefined image parameters, the computational cost of creating the graphical representation can be reduced.

Subsequently, the image processor 105 can apply a card template to provide a card representation including the graphical representation in combination with template features. The card template can define layout criteria for the card representation. The image processor 105 incorporates the graphical representation into the card template, preserving preapproved features (e.g., bank logos, chip areas, scheme logos). The image processor 105 can perform visual adjustments to align the graphical representation with these preapproved template features (e.g., geometric transformations for visibility).

The image processor 105 can comprise a graphical control interface configured to enable user interaction, including manipulation of the graphical representation (e.g., cropping, color adjustments, etc.). The image manipulation can be constrained by the position and shape of preapproved template features.

The verification module 106 can employ another generative AI component configured to scan the graphical representation and/or the card representation. The verification module 106 may also take the confidence score into account. For example, a low confidence score can trigger a more in-depth analysis. The output of this verification module 106 can be a description, e.g., a word-based description of the graphical representation and a judgment, e.g., in form of the compliance score, of whether the image is acceptable or not.

The analysis performed by the verification module 106 can either be based on the graphical representation and/or the card representation. The verification module 106 can also be configured to issue a further classification, e.g., passing P₂, conditional passing C₂ or a rejecting R₂. the graphical representation.

The verification module 106 can be configured to provide analysis results for further review. Preferably, the analysis results are provided in a human readable format, e.g., comprising an image description, text-based analysis of the image content, preferably in relation to relevant exclusion criteria, and/or subsections of the generated graphical representation relevant to the analysis. The verification module can be configured to provide the analysis results to a human reviwer. Thereto, the verification module 106 can comprise an interface to control a further review process. For example, the verification module 106 can receive instructions to provide feedback relating to a final rejection of the user input to the input module, to provide training data relating to the user input for the generative AI component, and/or acceptance data finally clearing the graphical representation and/or card representation for processing.

The compliance score and the corresponding evaluation can be provided to a final review process by a human reviewer. The reviewer can read the description and make a final decision whether accept the submitted image or reject it. Should the graphical representation, respectively card representation be rejected, a reasoning for the decision can be provided to the generative AI component to enhance future screening of the input text. This input can train the generative AI component as to what to be cautioned about and/or tune a decision process to reduce future false positives.

FIG. 2 shows a schematic representation of the method 200 for generating a personalized card representation according to an embodiment of the present invention. The method can comprise receiving 201 a user input and subsequently performing 202 a content check of the user input according to the guideline data. Checking the user input can result in a rejection of the user input. This can be communicated to the user. The user can also be prompted to amend the previous input and/or provide a reasoning as to why the previous input is in agreement with the guidelines. The iteration of user input and content check can be performed for a set number of cycles. Checking the user input can alternatively result in a conditional pass C1. A user input with a conditional pass C1 can be provided to the image generator. Additionally, the conditional pass user input can be flagged for further review, e.g., by the verification module and/or a human reviewer. The type of pass P1, C1 or rejection R1 can be determined according to a generated confidence score. Thereto, the content check can comprise determining a confidence score of the user input corresponding to a probability of the user input violating a context exclusion criterion according to the guideline data.

The content check can result in a pass such that the user input is forwarded to the image generator. Thereto, no additional verification may occur. In particular depending on the robustness of the content check, an additional content check after image generation may also be performed for user input initially passing the content check.

In step 203, the graphical representation can be generated. The graphical representation can be provided for a further check, preferably executed by the verification module. The further content check 207 can comprise generating a word-based description and/or a machine-readable interpretation of the graphical representation. This can represent an analysis to which a compliance score can be generated corresponding to a compliance of the description, i.e., the graphical representation to the guideline data. Depending on the previous categorization as pass P₁ or conditional pass Ci, and the corresponding description and/or the compliance score, the corresponding card representation can be verified for production. The verification can either be based on the graphical representation and/or the card representation. The verification can also result in a pass P₂, conditional pass C₂ or a rejection R₂.

Generating the description and/or compliance score may be affected by the image manipulation. For example, cropping, zooming, rotating, and/or shifting the graphical representation within the card template may alter the subject, focus or overall content.

The method can further comprise providing 206 training data according to the description and/or compliance score to the generative AI component to achieve further training of the decision logic. Similar to the initial content check, the verification can also produce a rejection. When rejecting the graphical representation and/or card representation, a further user input can be request. Preferably, a reasoning, a corresponding exclusion criterion, and/or options to remedy the rejection can be presented to the user. The user may subsequently provide arguments in a further user input as to why the content should pass. This can trigger an additional loop of content checking.

Correspondingly, the verification can also result in a conditional pass C₂ such that the card representation is not directly rejected but flagged for further review 205, e.g., a manual review. The manual review process may provide further feedback to the user should the verification ultimately fail and/or training data in case of an ultimately failed and in an ultimately passed verification.

## Claims

1. A system (100) for generating a personalized card representation, comprising:
an input module (101) configured to receive a user input descriptive of a graphical representation, wherein the user input is word-based;
a database module (102) configured to store guideline data defining exclusion criteria for the user-input;
a scoring module (103) configured to perform a content check of the user input according to the guideline data;
an image generator (104) configured to generate a graphical representation according to the user input when the content check is passed;
an image processor (105) configured to generate the personalized card representation according to the graphical representation and according to a card template.

2. The system (100) according to claim 1, wherein the scoring module (103) is configured to determine a confidence score of the user input corresponding to a probability of the user input adhering to exclusion criteria according to the guideline data, and wherein the content check of the user input fails when the confidence score undercuts a minimum confidence threshold.

3. The system (100) according to any one of the preceding claims, comprising a verification module (106) configured to generate a description of the graphical representation, to generate a compliance score, and to verify the card representation for production, when the description passes the content check according to the guideline data and the compliance score exceeds a minimum compliance threshold.

4. The system (100) according to claim 3, wherein the verification module (106) is configured to provide update instructions to update the content exclusion criteria when the compliance score undercuts a minimum compliance value, wherein the update instructions comprise text-based criteria according to the user-input, whose corresponding card representation failed verification.

5. The system (100) according to any one of the preceding claims, wherein the scoring module (103) is configured to determine a context parameter according to the user input defining an emotional context, and wherein the scoring module (103) is configured to determine at least one of
an affective tone,
an emotional valence,
emotive undertones, and
sentimental resonance according to the user input.

6. The system (100) according to any one of the preceding claims
wherein the scoring module (103) is configured to provide a content warning when a content exclusion criterion is violated, and to prompt the user to provide a modified user input, comprising an amendment to remedy the content exclusion criterion violation.

7. A Method (200) for generating an individualized card representation, comprising the steps of
receiving (201) a user input descriptive of a graphical representation, wherein the user input is word-based;
performing (202) a content check of the user input according to guideline data defining content exclusion criteria for the user-input;
generating (203) a graphical representation according to the user input when the content check is passed; and
generating (204) the card representation according to the graphical representation and according to a selected card template.

8. The method according claim 7, comprising the steps of
determining a confidence score of the user input corresponding to a probability of the user input adhering to an exclusion criterion according to the guideline data;
wherein generating the graphical representation is conditional on the confidence score exceeding a confidence threshold value;
analysing (206 the graphical representation to determine a compliance score corresponding to a probability of the graphical representation adhering to the guideline data; and
verifying the card representation for production, when the compliance score exceeds a minimum compliance threshold.

9. A computer program product, comprising:
computer-readable medium bearing instructions executable by a processing device capable of receiving a user input and providing a card representation,
wherein the instructions, when executed by the processing device, cause the processing device to perform steps of the method (200) according to any one of claims 7 or 8.

10. A computer-readable data carrier, comprising:
a non-transitory computer-readable medium;
wherein the medium has stored thereon a computer program according to claim 9, and wherein the computer program, when executed by a processing device, causes the processing device to perform the method (200) according to any one of claims 7 or 8.
